# FASCICULE DE BREVET EUROPEEN

(11) **EP 3 190 137 B1**
(45) Date de publication et mention de la délivrance du brevet: **09.09.2020**
(21) Numéro de dépôt: 17158718.1
(22) Date de dépôt: 23.09.2011
(51) Int. Cl.: C08G 63/48, C09D 167/08, C08J 3/05, C08L 67/08, B01F 3/08, B01F 7/00

(54) **RESINES POLYESTERS A BASE D'ACIDES GRAS DE LONGUEUR EN HUILE COURTE ET REVETEMENTS LIES**
POLYESTERHARZE AUF DER BASIS VON FETTSÄUREN MIT NIEDRIGEM ÖLGEHALT UND ENTSPRECHENDE BESCHICHTUNGEN
SHORT OIL LENGTH FATTY ACID-BASED POLYESTER RESINS, RELATED COATINGS

(30) Priorité: 27.09.2010 FR 1003817
(43) Date de publication de la demande: 12.07.2017
(62) Demande divisionnaire de: 11773751.0
(73) Titulaire: Arkema France, 92700 Colombes (FR)
(72) Inventeur: HERVE, Grégoire, 75012 Paris (FR); KURCZAK, Michael, 60140 LIANCOURT (FR); BEURDELEY, Patricia, 95160 MONTMORENCY (FR)
(74) Mandataire: Arkema Patent

(56) Documents cités:
- WO-A2-95/02019
- FR-A1- 2 253 057
- FR-A1- 2 483 434
- US-A- 2 791 568
- US-A- 3 440 193
- US-A- 4 039 495
- US-A1- 2007 167 603

## Description

L'invention concerne une résine de polyester à base d'acide gras, en particulier résine alkyde, ayant une longueur en huile courte ou même nulle, modifiée à proportion élevée par de la colophane ou ses dérivés, une composition de liant à base de cette résine modifiée, plus particulièrement une dispersion aqueuse à base de cette résine sans aucune présence de solvant organique et les applications comme liant dans les revêtements et, en particulier, dans les revêtements aqueux pour adhésifs, peintures, lasures, primaires ou vernis. Cette résine polyester, et en particulier alkyde, utilise un fort taux de matières premières d'origine renouvelable et a des performances spécifiques, en particulier concernant le développement de dureté avec le temps après l'application et la réduction de jaunissement. En particulier, la nouvelle résine peut être utilisée comme liant dans des compositions aqueuses de revêtements décoratifs ou industriels capables de durcir à l'air avec ou sans agent siccatif.

Les alkydes en milieu solvant organique, autrement appelées solvantées, sont des résines bien connues de longue date par l'homme du métier, utilisées, en règle générale, dans les revêtements et les formulations de peintures décoratives et industrielles. Pour répondre à des questions de confort d'utilisation, d'odeur et de toxicité, des émulsions d'alkydes spécifiques ont été développées et mises sur le marché depuis une vingtaine d'années environ, avec des niveaux de performance intéressants en termes de brillant, de séchage, d'aspect/couleur, de stabilité, d'odeur. Une solution technique de mise en œuvre conventionnelle, employée pour former des émulsions d'alkydes stables dans le temps, consiste à utiliser une combinaison d'un tensioactif non ionique avec un tensioactif anionique comme décrit dans WO 2008/076360.

WO95/02019 décrit une émulsion comprenant une résine alkyde séchant à l'air dispersée dans l'eau et ayant une longueur en huile entre 20 et 90%, avec l'alkyde étant stabilisée par des groups acides salifiés et chimiquement attachés à la résine alkyde, lesdits groupes acides ayant un pKa inférieur à 3. Est également décrite la préparation desdites résines alkydes et également des émulsions hybrides de résines alkydes et acryliques. US 2 791 568 décrit une résine alkyde à base de 40 % d'acide abiétique, 20 % d'acide laurique et 40 % de glycérol. Donc cette résine alkyde possède 40 % en masse de colophane portant au moins une fonction acide. L'acide laurique étant saturé, le rapport en poids d'acides (monoacides) gras oxydables par rapport aux acides gras globalement est de 0.

Malgré ces améliorations, certains paramètres et performances restent encore à améliorer tels que la résistance au jaunissement, la résistance au blocking, la dureté, la sensibilité à l'eau et la biodégradabilité. La tendance au jaunissement est un caractère naturel et intrinsèque des résines alkydes, limitant ainsi leur emploi à des applications finales bien spécifiques comme en couche primaire, lasures, bois, finitions (trim). Les premières émulsions d'alkydes décrites dans la littérature concernent des alkydes avec des longueurs en huile importantes et de l'ordre de 65 à 82% comme décrit dans Colloids Surfaces A. Physicochem. Eng. Aspects 1995, 94, 161-171. L'émulsification de résines à longueur en huile plus réduite est relativement délicate à mettre en œuvre, du fait de l'affinité plus faible des tensioactifs avec la résine comme expliqué dans Prog. Org. Coat. 1994, 24, 281-97. Néanmoins, aujourd'hui, les produits commerciaux affichent une longueur en huile moyenne de 50%, comme décrit dans WO 2009/140192 ou même une longueur en huile plus courte jusqu'à approximativement 40% pour les longueurs en huile les plus basses, comme décrit dans Prog. Org. Coat. 2000, 40, 253-266 ou encore plus récemment dans WO 2008/076360. Pour une utilisation plus systématique et universelle, il est nécessaire de trouver des solutions garantissant des produits développant moins de jaunissement pour des applications de plus grande envergure comme murales ou sur plafonds. Aujourd'hui, ces applications sont presque exclusivement réservées aux émulsions acryliques reconnues depuis longtemps pour leur bonne tenue au jaunissement et à l'oxydation mais les émulsions acryliques ont des inconvénients tels que le plus faible brillant, la sensibilité à l'eau (plus faible résistance à l'eau), la moins bonne résistance chimique.

La résine de la présente invention se propose de remédier aux inconvénients cités de l'état de l'art, tout en permettant une dispersibilité dans l'eau élevée sans aucun besoin de solvant organique et en l'absence de groupements rendant la résine autodispersible. Cette aptitude rend possible l'obtention de dispersions de résines sans aucun solvant organique ni colloïdes protecteurs et stables au stockage et l'obtention des revêtements liés à un brillant et à une dureté élevés, et par son caractère hydrophobe, une résistance à l'eau élevée, comme une résistance élevée au jaunissement avec le temps. Un avantage supplémentaire lors du séchage des dispersions des résines, selon la présente invention, est le développement plus rapide avec le temps d'une dureté élevée et stable et ceci sans besoin d'addition systématique d'agent de siccativation de type Co (cobalt). Ceci conduit ainsi à une solution amicale pour l'homme et pour son environnement du fait de l'absence à la fois de solvants organiques dans la dispersion et l'absence d'agents siccativants au séchage mais aussi par le choix des matières premières essentielles, dans la mesure où un fort taux de ces matières premières est d'origine renouvelable et durable et pouvant également conduire à des structures chimiques plus facilement biodégradables. Les dispersions de l'invention et les revêtements qui en résultent sont ainsi favorables au respect de l'environnement, tout en présentant des performances d'application tout au moins identiques, sinon améliorées par rapport aux revêtements aqueux conventionnels. En complément à la protection de l'environnement, il convient de souligner la nature fortement renouvelable desdits liants aqueux selon la présente invention, qui sont préparés majoritairement à partir de colophane et de corps gras naturels. Cet avantage est notable puisque, dans certains cas, la proportion de matières premières renouvelables atteint un taux de 100% sur la composition globale de la résine (tensioactifs exclus). Ceci permet la fabrication de ce nouveau type de résine, utilisable comme liant, à travers notamment la disponibilité durable et saisonnière desdites matières premières. Ces mêmes causes permettent aussi de limiter l'impact environnemental via une empreinte carbone réduite et un cycle de vie amélioré. Ces deux paramètres reflètent l'impact des produits fabriqués sur l'environnement et la santé. Les ressources dites renouvelables ou bio-sourcées permettent en particulier de diminuer les émissions de gaz à effet de serre tel que le dioxyde de carbone.

Dans ce but, la présente invention propose une nouvelle gamme de résines polyesters à base d'acides gras oxydables et/ou non oxydables, en particulier de résines alkydes, à longueur en huile courte fortement réduite ou nulle, pour leur mise en dispersion dans l'eau à l'aide de tensioactifs, et capables de durcir de façon importante sans apport excessif d'acides ou d'huiles gras insaturés. Ces dispersions, appelées communément « émulsions », donnent après application sur substrat, des revêtements stables dans le temps et garantissent une évolution de jaunissement faible ainsi qu'un développement de dureté important après application et séchage, et ceci malgré une longueur en huile fortement réduite ou nulle. La capacité même de certaines résines à très faible longueur en huile, en particulier de 0 à 15%, à durcir fortement et rapidement avec le temps de séchage, et surtout sans apport nécessaire d'agent de siccativation, est un avantage significatif dans le contexte environnemental actuel. Plus particulièrement, dans ce contexte, la mise en oeuvre des systèmes séchants sans Co est un besoin de plus en plus important, compte tenu des restrictions environnementales croissantes dans l'usage du cobalt comme agent siccativant.

Plus particulièrement, la résine selon l'invention à longueur en huile nulle (0%) ou à longueur en huile allant jusqu'à 5% (signifiant une plage de longueur en huile de 0 à 5%), en plus de son aptitude à être utilisée comme résine pour obtenir des dispersions aqueuses pour revêtements aqueux, comme décrit ci-haut, a également l'aptitude d'être utilisée comme résine liant pour revêtements non aqueux et plus particulièrement pour les applications bi-composantes, par exemple comme résines de revêtements «coil» pour application sur tôles métalliques. Les mêmes améliorations de performances qu'avec les revêtements aqueux sont obtenues, notamment en termes de dureté et résistance chimique par exemple. Les revêtements non aqueux obtenus avec une résine liant selon l'invention, ayant une longueur en huile nulle (0%) ou à longueur en huile allant jusqu'à 5%, donnent en plus (performance supplémentaire) une amélioration significative de l'adhérence sur acier et en particulier sur acier galvanisé.

Les alkydes sont des oligomères traditionnellement obtenus par polycondensation entre des diacides et des polyols en présence d'une proportion plus ou moins importante d'« huile» ou d' «acides gras insaturés oxydables ». Les diacides et les polyols habituellement employés pour former la structure polymère sont l'anhydride phtalique, l'acide isophtalique, le pentaérythritol et la glycérine (ou glycérol). Les masses moléculaires moyennes en nombre Mn peuvent ainsi varier entre 1 000 et 10 000 g/mol, en fonction du rapport OH/CO₂H (hydroxy/carboxy) utilisé. Des monoacides tels que l'acide benzoïque et la colophane (contenant principalement et majoritairement des acides résiniques naturels tels qu'acides abiétiques y compris acide déhydroabiétique, acides pimariques, acides mercusiques et acides communiques) peuvent être ajoutés dans les alkydes comme composant acide. Ces composants permettent ainsi de diminuer la longueur en huile et d'augmenter la dureté de l'alkyde. Par contre, la réduction de la longueur en huile rend la résine moins facilement dispersible dans l'eau avec des tensioactifs et surtout sans l'aide de solvant. Selon Paintindia, Nov. 2007, 61-65, il est indispensable d'utiliser du solvant organique pour faciliter la dispersion dans l'eau mais la présence d'un tel solvant organique n'est pas compatible avec un respect environnemental comme exigé dans la présente invention. En réduisant la longueur en huile de certaines alkydes, nous avons trouvé de façon inattendue que la colophane utilisée dans les conditions de l'invention permet de faciliter considérablement le développement avec le temps de la dureté des revêtements, en particulier revêtements d'alkydes, ainsi formés lors du séchage oxydatif appelé aussi siccativation et également de faciliter la dispersion aqueuse de la résine sans aucun besoin de solvant organique ni colloïde protecteur. La dureté liée au durcissement observé de la résine augmente au cours du temps après application de la composition de revêtement et offre une excellente dureté finale au film, nettement supérieure à celles enregistrées pour les émulsions d'alkydes traditionnelles, ayant des longueurs en huile comprises usuellement entre 40 et 85%.

L'invention concerne d'abord une résine polyester à base d'acides gras, courte en huile ou de longueur en huile nulle, modifiée par la colophane et/ou ses dérivés. Ces résines sont utilisables comme liants organiques en dispersion aqueuse pour revêtements aqueux. Plus particulièrement, la résine à longueur en huile nulle (0%) ou à longueur en huile allant jusqu'à 5%, est également utilisable comme liant organique pour revêtements non aqueux bicomposants (2K), en particulier pour «coil» ou tôle métallique et de préférence pour acier galvanisé.

Ensuite, l'invention concerne une composition de liant organique comprenant au moins une résine modifiée, comme décrit ci-dessus et plus particulièrement comprenant en plus de cette résine modifiée, au moins une deuxième résine différente de la première et sélectionnée parmi les polyesters à base d'acides gras.

Le troisième objet de l'invention concerne une dispersion aqueuse de résine comprenant au moins une résine modifiée telle que définie selon le premier objet de l'invention ou au moins une composition de liant organique comme définie selon le deuxième objet de l'invention.

Un autre objet de l'invention concerne un procédé de préparation d'une dispersion aqueuse, comme définie selon le troisième objet de l'invention.

L'invention couvre également une composition de revêtement qui comprend au moins une résine modifiée comme définie selon le premier objet de l'invention ou au moins une composition de liant organique comme définie selon le deuxième objet de l'invention ou au moins une dispersion aqueuse comme définie selon le troisième objet de l'invention.

L'invention concerne aussi l'utilisation des résines modifiées selon le premier objet ou des compositions de liant organique selon le deuxième objet ou des dispersions aqueuses selon le troisième objet de l'invention, en tant que liant dans des compositions de revêtements.

Finalement, l'invention concerne l'utilisation des résines modifiées selon le premier objet avec une longueur en huile nulle ou à longueur en huile allant jusqu'à 5%, en tant que liant organique dans des revêtements non aqueux à base d'un système réactif bi-composant, plus particulièrement pour des applications « coil » sur tôles métalliques.

Donc, le premier objet de l'invention concerne une résine de polyester, en particulier résine alkyde, laquelle résine :
- est à base d'au moins un acide gras
- a une longueur en huile nulle (0%) ou une longueur en huile entre 0 et 35%, de préférence supérieure à 0 et jusqu'à 25%, plus préférentiellement jusqu'à 15%
- a un rapport en poids d'acides (monoacides) gras oxydables par rapport aux acides gras globalement, de 0 ou supérieur à 0 et allant jusqu'à 1
- est à base d'un composant acide comprenant en plus dudit acide gras, de 40 à 75% et encore plus préférentiellement de 45 à 75% en poids par rapport au poids total de ladite résine, de colophane et/ou de dérivés de colophane portant au moins une fonction acide carboxylique, et plus particulièrement pour ses dérivés maléinisés (dérivés maléinisés de colophane), portant de 3 à 4 fonctions carboxyliques.

Selon un mode préféré, la résine de l'invention comprend moins de 5%, de préférence moins de 3% en poids, et plus préférentiellement aucun (0% de) composé aromatique, comme par exemple de type phtalique (anhydride ou acide phtalique, isophtalique, triméllitique ou encore téréphtalique), en dehors des dérivés de la colophane éventuellement utilisés. Par « dérivés de la colophane », on entend des dérivés naturels tel que l'acide déhydroabiétique.

La résine de l'invention est, selon un autre cas préféré, à base d'un composant acide comprenant en plus dudit acide gras, en plus de ladite colophane et/ou en plus desdits dérivés de colophane, au moins un composé acide ayant au moins une fonction acide carboxylique et une fonctionnalité globale de 2 à 3, fonctionnalité globale incluant la fonction acide et une éventuelle autre fonction possible, ledit composé étant choisi parmi : les polyacides saturés ou les polyacides éthyléniquement insaturés ou les hydroxy-acides. Les polyacides saturés n'ont pas d'insaturation éthylénique réactive lors de leur utilisation et peuvent très bien dériver des polyacides insaturés, ayant au moins une insaturation réactive, par hydrogénation de ces polyacides insaturés. Plus particulièrement, la résine de l'invention peut être à base d'un composant acide qui comprend au moins deux parmi lesdits composés acides, avec au moins un choisi parmi les polyacides saturés et un autre choisi parmi les polyacides insaturés, ceci en plus dudit acide gras et de ladite colophane et/ou desdits dérivés de colophane. Comme polyacide saturé convenable selon l'invention, on peut choisir parmi l'acide et/ou l'anhydride correspondant à : l'acide succinique de fonctionnalité 2, l'acide adipique de fonctionnalité 2, l'acide sébacique de fonctionnalité 2, l'acide dodécanedioïque de fonctionnalité 2, l'acide citrique de fonctionnalité 3, le dimère d'acide gras en C₃₆ de fonctionnalité 2 à 2,2 ou le trimère d'acide gras en C₅₄ de fonctionnalité 2,5 à 3. Comme polyacide insaturé convenable, on peut choisir parmi l'acide et/ou l'anhydride existant correspondant à : l'acide itaconique de fonctionalité 2, l'acide maléique ou fumarique de fonctionnalité 2 ou l'acide tétrahydrophtalique (THP) de fonctionnalité 2. Parmi les polyacides préférés, on peut citer les polyacides comprenant au moins un dimère en C₃₆ et/ou trimère en C₅₄ d'acide gras. Comme défini ci-haut, ledit composé acide, ayant au moins une fonction carboxylique et ayant une fonctionnalité globale de 2 à 3, peut également être choisi parmi les hydroxy-acides qui peuvent ainsi être présents dans ledit composant acide en plus des acides gras et de la colophane et ses dérivés. Comme hydroxy-acides préférés pouvant être ainsi présents, on peut citer l'acide glycolique ou l'acide lactique.

Une combinaison de plusieurs polyacides et monoacides est souvent utilisée afin d'optimiser les propriétés physico-chimiques de la résine, en particulier de l'alkyde, et plus particulièrement pour obtenir le compromis désiré de dureté/souplesse. L'incorporation dans les résines selon l'invention, en particulier dans les alkydes, de dérivés acides aromatiques comme les phtaliques (diacide/anhydride) ou benzoïques (monoacide) est possible mais de préférence avec un taux de moins de 5% en poids, et plus préférentiellement avec moins de 3% en poids. Encore plus préférentiellement, il n'y a aucun dérivé aromatique (0% d'aromatiques) en dehors d'éventuels dérivés naturels de colophane comme décrit plus haut. La présence d'un composant monoacide tel que les acides abiétiques ou pimariques, en particulier de la colophane et/ou de ses dérivés, et plus particulièrement à un taux aussi important, constitue l'élément essentiel de l'invention pour permettre les propriétés particulières observées. Le taux de colophane est élevé et varie de 40 à 75% et encore plus préférentiellement de 45 à 75%. Les acides gras utilisés, compte tenu de leur origine naturelle, sont des mélanges comprenant des acides gras saturés, insaturés à insaturations non conjuguées et à insaturations conjuguées. Ces acides gras, ainsi que les acides gras dimères et/ou trimères synthétisés à partir de ces mêmes acides gras naturels, apportent la souplesse et la flexibilité nécessaire au liant et au revêtement obtenu qui en résulte.

Le terme «acide gras» défini au plus large signifie un acide carboxylique en C₁₂ à C₅₄.

Le terme « longueur en huile », tel qu'utilisé dans la présente invention, signifie le % en poids par rapport au poids total de la résine, du poids de « monoacides gras» ou d'huiles ou de dérivés standolies d'huiles (la standolie est un produit résultant de la réaction à haute température, 250-300°C d'un mélange d'huile et d'acide gras), ce % en poids étant exprimé en poids équivalent de dérivés triglycérides (huiles) qui correspondent aux acides gras, lesdits acides gras étant « oxydables ». Tout calcul et mention de cette caractéristique dans la présente invention est basé sur cette définition. Le terme « acides gras oxydables » signifie, selon la présente invention, les acides gras ou dérivés (huiles ou standolies) ayant un indice d'iode supérieur ou égal à 80 mg d'iode par g de produit. Lesdits monoacides ou triglycérides (huiles) peuvent être des mélanges d'origine naturelle, comprenant jusqu'à 30% en poids d'acides gras saturés.

De préférence, le taux d'insaturation oxydable (réactive à l'air) de la résine de l'invention est nul (0) ou il est supérieur à 0 et va jusqu'à 0,25, et de préférence jusqu'à 0,15 mmol de doubles liaisons oxydables par gramme de résine sèche (non diluée).

Selon une possibilité particulière, la résine de l'invention est basée sur un composant alcool comprenant au moins un polyol de fonctionnalité allant de 2 à 10 et de préférence de 3 à 6. Les polyols convenables selon l'invention peuvent être sélectionnés parmi : éthylène glycol, polyéthylène glycol, de préférence de masse moléculaire moyenne en nombre Mn allant de 300 à 6 000, propylène glycol (propane diol-1,2), 1,3-propanediol, dipropylène glycol, triéthylène glycol, glycérol, diglycérol, triméthylol propane ou triméthylol éthane, pentaérythritol, dipentaérythritol, sorbitol, mannitol, méthyl glucoside, polyglycérol, en particulier oligomères de glycérol, comme le Polyglycérol-3 (trimère de glycérol) et décaglycérol et de préférence, les oligomères de glycérol et leurs mélanges, tel que le Polyglycérol-3, lequel Polyglycérol-3 est un mélange d'oligomères du glycérol (glycérine oligomérisée avec présence d'oligomères contenant en poids 30 à 55% de trimère de glycérol constituant l'oligomère prédominant) produit commercialisé par Solvay. Le polyol le plus préféré est le Polyglycérol-3 qui est oligomérisé et a une masse moléculaire nettement supérieure à celle de la glycérine, avec une fonctionnalité allant de 5 à 6. Grâce à sa masse moléculaire plus élevée et à sa fonctionnalité élevée, ce polyol permet d'augmenter plus aisément la masse moléculaire finale de la résine, en particulier de la résine alkyde, tout en garantissant une distribution moléculaire plus étroite.

La résine préférée de l'invention a un indice d'acide inférieur à 8 et une masse moléculaire moyenne en nombre Mn allant de 1 000 à 10 000 g/mol, mesurée par GPC dans le THF et exprimée en équivalent Polystyrène.

La Tg de la résine de l'invention mesurée par DSC, après deux passages à une vitesse de balayage en température de 10°C/min, peut varier de -40 à 50°C, et de préférence de -20 à 35°C.

Plus particulièrement, selon une première version, la résine a une longueur en huile qui est comprise entre 0 et 35%, et de préférence elle est supérieure à 0 et va jusqu'à 25%, et plus préférentiellement jusqu'à 15%, avec présence d'au moins un acide (monoacide) gras oxydable. Cela signifie que la résine comprend une structure oxydable à l'air. Selon un cas plus particulier de cette version de résine oxydable, le taux d'insaturation oxydable de ladite résine est supérieur à 0 et peut aller jusqu'à 0,25, et de préférence jusqu'à 0,15 mmol de doubles liaisons oxydables par gramme de résine sèche. Dans un tel cas (résine avec structure oxydable), ledit acide gras est sélectionné parmi les monoacides gras d'origine végétale ou animale de préférence en C₁₆ à C₂₄, avec un indice d'iode moyen allant de 100 à 200.

Selon la définition donnée de l'invention, l'acide gras peut être un acide gras (monoacide gras) oxydable ou un acide gras non oxydable, en particulier un polyacide comme les oligomères d'acides gras et en particulier les dimères et/ou trimères d'acides gras en C₃₆ et C₅₄ respectivement. Ledit acide gras peut être oxydable et sélectionné parmi les acides gras d'huile de soja, tournesol, tall (TOFA), ricin, ricin déshydraté, lin, colza, lesdits acides gras étant utilisés comme tels ou sous forme d'huiles (esters triglycérides) correspondantes d'acides gras ou sous forme de standolies correspondantes d'huile d'acides gras. Lesdites standolies, bien connues de l'homme du métier, sont en fait des dérivés d'huiles d'acides gras obtenus à haute température par standolisation de ces huiles. Ces cas d'acides ou d'huiles d'acides gras ont des insaturations oxydables comme définis ci-haut selon la caractéristique d'indice d'iode supérieur ou égal à 80 mg d'iode par gramme de produit acide ou huile ou standolie d'huile d'acide gras.

Selon une version préférée de la résine de l'invention, elle est à base d'un polyacide comprenant au moins un dimère d'acide gras en C₃₆ et/ou un trimère d'acide gras en C₅₄ et à base d'un polyol comprenant au moins un oligomère de glycérol et/ou le pentaérythritol et/ou le dipentaérythritol, de préférence un mélange d'oligomères de glycérol comprenant le trimère de glycérol, plus particulièrement le Polyglycérol-3.

Selon une version plus particulière, la résine polyester de l'invention est une résine alkyde, avec un taux en huile (longueur en huile) supérieur à 0%, et de préférence allant jusqu'à 25%, plus préférentiellement jusqu'à 15%.

Une autre catégorie de résine selon l'invention a une longueur en huile ou un taux d'huile nul (0%) et couramment appelée « oil-free », avec ledit acide gras étant sélectionné parmi les acides gras non oxydables et donc, avec un taux correspondant d'insaturation oxydable qui est de 0 mmol par gramme de résine sèche. Dans ce cas, ledit acide gras est de préférence sélectionné parmi les acides gras saturés (y compris acides gras initialement oxydables qui ont été hydrogénés et par conséquent deviennent non-oxydables) ou parmi les oligomères d'acides gras, de préférence les dimères en C₃₆ (dimères y compris hydrogénés) et/ou les trimères en C₅₄ (trimères, y compris hydrogénés). De préférence, une telle résine (0% d'huile) est à base d'un composant alcool comprenant comme polyol un oligomère de glycérol, de préférence un mélange d'oligomères de glycérol, et plus préférentiellement le Polyglycérol-3 et comme acide gras un dimère d'acide gras en C₃₆ et/ou un trimère d'acide gras en C₅₄ (hydrogénés ou non). Une résine à comportement comparable, en particulier pour applications en système de revêtement bi-composant, est également une résine ayant un taux d'huile allant jusqu'à 5% laquelle en plus dudit acide gras sélectionné parmi les acides gras non oxydables, tels que définis ci-haut, comprend (en plus) en proportions minoritaires en poids, un acide gras oxydable conduisant audit taux d'huile allant jusqu'à 5%. Ledit acide gras oxydable, minoritaire dans ce dernier cas, peut être présent comme acide résiduel avec la colophane utilisée : par exemple, la colophane de « tall » comprend en faibles proportions (environ 4%) de l'acide gras de tall qui est oxydable. Ainsi, comme dans ce cas particulier, ledit acide oxydable peut également être présent ou ajouté dans de telles proportions minoritaires pour arriver à une longueur en huile pouvant aller jusqu'à 5%.

La préparation de ladite résine selon l'invention, en particulier de l'alkyde, est réalisée par réaction de polycondensation sous atmosphère inerte à des températures standard comprises entre 180°C et 300°C, de préférence entre 250°C et 270°C, et plus préférentiellement avec application d'un vide (pression réduite) de niveau moyen allant de 50 à 250 mm Hg, en fin de polycondensation afin de réduire les temps de réaction. Il est possible, afin de prévenir et/ou de réduire davantage la coloration et l'oxydation de la colophane pendant la synthèse, d'utiliser des additifs, anti-oxydants en particulier, tels qu'employés dans la préparation d'esters de colophane utilisés en particulier pour les adhésifs : phénol sulfites, paraformaldéhyde, acide hypophosphoreux, trialkyl ou triphényl phosphites. Une liste plus exhaustive d'additifs pouvant être utilisés dans ce but est décrite dans US 4,744,925, col 2, lignes 50-62, laquelle liste est incorporée ici par référence.

Le deuxième objet de l'invention est donc une composition de liant organique qui comprend au moins une résine telle que définie ci-dessus selon l'invention.

Selon un cas plus préféré, cette composition comprend au moins deux résines et plus précisément, en plus de la première résine telle que définie selon l'invention ci-haut, elle comprend au moins une deuxième résine différente de la première, et avec cette deuxième résine étant sélectionnée parmi les résines de polyesters à base d'acides gras, de préférence parmi les résines alkydes modifiées. Donc de préférence, lesdits polyesters à base d'acides gras sont des alkydes modifiées chimiquement choisies parmi : alkydes siliconées, alkydes uréthanes, hybrides alkydes-acryliques. Ces compositions de liants peuvent être utilisées comme telles ou dans la préparation des dispersions aqueuses de résines de l'invention, pour revêtements aqueux.

Selon une variante particulière de cette composition de liant organique, bien adaptée pour les revêtements non aqueux ou solvantés et plus particulièrement pour systèmes réactifs bi-composants (2K), encore plus particulièrement pour revêtements « coil » sur tôles métalliques, ladite première résine est une résine selon l'invention et a une longueur en huile nulle (0%) ou une longueur en huile allant jusqu'à 5%.

Le troisième objet de l'invention est une dispersion aqueuse de résine qui comprend au moins une résine ou au moins une composition de liant telle que définie ci-haut selon la présente invention. Selon une variante particulière préférée de cette dispersion aqueuse selon l'invention, elle comprend en plus de ladite résine ou de ladite composition de liant, toutes deux comme définies selon l'invention décrite ci-haut, au moins un tensioactif sélectionné parmi : au moins un tensioactif anionique et au moins un tensioactif non ionique ou au moins un tensioactif de structure mixte et avec un taux global en poids par rapport à ladite résine allant de 2 à 15%, de préférence de 5 à 10%. Selon la présente invention, un tensioactif de structure mixte est un tensioactif qui comprend à la fois une structure non ionique, tel qu'un segment polyoxyalkylène (plus particulièrement unités oxyéthylène et/ou oxypropylène) et une structure anionique (comme par exemple un groupement sulfonate ou sulfate ou phosphate ou phosphinate) sur la même molécule ou chaîne moléculaire. Comme exemples de tels tensioactifs, on peut citer les esters sulfonates ou sulfates ou phosphates ou phosphinates d'alcools polyethers ou d'alcools gras alkoxylés, avec des structures non-ionique (polyéther) et anionique (sulfate, sulfonate ou phosphate ou phosphinate), combinées sur la même molécule.

La dispersion selon l'invention peut avoir un extrait sec allant de 30 à 70% et de préférence de 40 à 60% et une taille moyenne de particules allant de 100 à 500 nm. La dispersion préférée selon l'invention est exempte de tout solvant organique, ceci signifiant, selon la présente invention, un taux correspondant de composés organiques volatils (COV ou en anglais VOC) dans ladite dispersion, inférieur à 1 000 ppm, de préférence inférieur à 500 ppm et plus préférentiellement inférieur à 100 ppm.

Encore plus particulièrement, la dispersion aqueuse de résine, selon la présente invention, est un mélange de, ou comprend en mélange, une première dispersion aqueuse de résine telle que définie selon l'invention comme décrit ci-dessus et au moins une deuxième dispersion de résine, laquelle deuxième dispersion est différente de la première dispersion, cette deuxième dispersion de résine étant sélectionnée parmi les dispersions d'alkydes, éventuellement modifiées ou les dispersions (ou émulsions) acryliques, y compris styrène-acrylique, ou les dispersions d'autres polymères et en particulier les dispersions de polyuréthanes, de polyesters saturés ou insaturés. Selon ce cas particulier de dispersion aqueuse, le taux en poids de ladite première dispersion varie de 50 à 99,5%. Lesdites dispersions d'alkydes modifiées qui peuvent convenir pour ladite deuxième dispersion, selon ce cas particulier, sont choisies parmi les dispersions d'alkydes modifiées à l'acrylique, styrène, styrène-acrylique, vinylique, silicone ou uréthane. Ladite deuxième dispersion est également sélectionnée de manière à être compatible avec la première dispersion aqueuse telle que définie selon ce cas particulier de dispersion et plus particulièrement, elle est à base d'une résine ou d'un polymère qui est compatible avec la résine de la présente invention, laquelle résine a comme spécificité une longueur en huile fortement réduite ou nulle.

Un quatrième objet de l'invention concerne un procédé de préparation de ladite dispersion aqueuse, lequel procédé comprend une étape d'émulsification à une température de 30 à 90°C, de préférence de 50 à 85°C, d'au moins une résine et/ou d'au moins une composition de liant organique, résine et composition de liant telles que définies ci-dessus selon l'invention, par inversion de phase dans un réacteur agité via un système d'agitation à double flux.

En fait, les résines, après la phase finale de polycondensation, sont refroidies à 120-180°C et sont ensuite transférées dans un émulsificateur pour y être dispersées dans de l'eau en présence de tensioactifs. L'émulsion est obtenue de préférence par la technique d'inversion de phase à l'aide d'un réacteur agité via un système de double flux à une température comprise entre 30°C et 90°C, de préférence à 50-85°C. La technique d'émulsification en voie directe n'est pas incompatible avec ce type de résine. La température imposée lors de l'inversion de phase est ajustée en fonction de la viscosité intrinsèque à chaud de la résine polyester ou alkyde. La résine est émulsionnée, à pH neutre ou légèrement alcalin, via la neutralisation plus ou moins partielle des fonctions carboxyliques résiduelles, selon un procédé standard associant un tensioactif ou de préférence un mélange de tensioactif ionique (anionique) et de tensioactif non ionique. Pour ces deux types de procédés, on utilise au moins un tensioactif. Ce tensioactif est sélectionné parmi les tensioactifs ioniques, de préférence anioniques et/ou non ioniques et/ou hybrides de structure mixte (comportant dans la même molécule une structure non-ionique comme éthoxylée et/ou propoxylée et une structure anionique). La présence de tensioactifs améliore la stabilité de la dispersion prévenant ainsi les phénomènes de sédimentation et/ou de coalescence au cours du procédé de mise en forme à chaud et lors du stockage/usage du produit. Un critère de sélection des tensioactifs non ioniques utilisés est l'indice HLB (Hydrophilic Lipophilic Balance) représentant le rapport de caractères hydrophile et hydrophobe du tensioactif. De préférence, une association d'un tensioactif non ionique et d'un tensioactif anionique est préférée pour obtenir des dispersions stables et de faible taille de particules, de préférence inférieure à 300 nm. Parmi les tensioactifs anioniques convenables pour cette invention, on peut citer les sels de sodium, lithium, potassium, ammonium ou de magnésium, des alkyl éthers sulfates avec alkyl variant de C₈ à C₁₈ ou alkyl benzène sulfates ou des alkyl sulfates en C₁₂, des esters alkyl phosphates ou les dialkyl sulfosuccinates ou même des savons obtenus à partir des acides gras correspondants. Les tensioactifs anioniques sont de préférence utilisés avec au moins un tensioactif non ionique. Comme exemple de tensioactifs mixtes (structure mixte non-ionique + anionique), on trouve les sulfonates ou phosphonates d'alkyl phénol alkoxylés. Les tensioactifs non ioniques peuvent être utilisés seuls mais, de préférence, ils sont en combinaison avec un tensioactif anionique. Comme exemples préférés de tensioactifs non ioniques convenables, on peut citer : les alcools gras en C₁₂-C₁₈ éthoxylés (6 à 50 OE), les alcools gras iso C₁₀ éthoxylés (6 à 50 OE), les alcools gras monobranchés en C₁₀-C₁₈ éthoxylés (6 à 50 OE), les esters gras de sorbitol, les esters de sorbitol éthoxylé (5-50 OE), les alkyl polyglucosides, les glucamides, les esters gras de glycérol, diglycérol ou polyglycérol, les acides gras éthoxylés (7-100 OE), l'huile de ricin (hydrogénée ou non) éthoxylée (30-40 OE), les acides gras de glycol ou polyéthylène glycol, les non ioniques polymériques et autres copolymères séquencés (ou à blocs) comme par exemple le copolymère séquencé poly(propylèneglycol)-poly(éthylèneglycol). La dispersion aqueuse préférée comprend au moins un tensioactif non ionique et éventuellement combiné avec au moins un tensioactif anionique à un taux global (non ionique plus anionique) en poids par rapport à la résine polyester ou alkyde de 2 à 15%, de préférence de 5 à 10%, et avec un rapport en poids, préféré, ionique sur non ionique allant de 25/75 à 50/50 dans le cas d'une combinaison non-ionique et anionique. Le pH du milieu est ajusté de préférence en fonction de l'acidité de la résine. C'est pourquoi une solution aqueuse basique, de 1 à 50%, de préférence de 10 à 20% en poids de base, est initialement introduite après l'ajout des tensioactifs, à la température d'émulsification (cf. tableau 4). A cet effet, on utilise des solutions aqueuses basiques (alcalines) à partir de LiOH, NaOH, KOH, ammoniaque ou encore des amines de préférence tertiaires ou encombrées plus ou moins hydrophiles comme la diéthanolamine, triéthanolamine, amino méthyl propanol ou encore la triéthylamine.

La dispersion aqueuse de la résine peut également être obtenue par autoémulsification de la résine sans tensioactif, pour une résine ayant un indice d'acide d'au moins 40 mg KOH/g, et ceci après neutralisation au moins partielle des fonctions carboxyliques de la résine. Cependant, dans le contexte de la présente invention, il est préféré que l'indice d'acide soit < 8 pour avoir la meilleure resistance à l'eau pour le revêtement final qui en résulte.

La dispersion aqueuse selon l'invention est de préférence exempte de tout colloïde protecteur.

Les extraits secs ou taux de solides desdites dispersions de l'invention vont de 30 à 70%, et de préférence de 40 à 60%, et plus préférentiellement de 40 à 55%.

Un autre objet de l'invention concerne une composition de revêtement qui comprend comme liant au moins une résine ou au moins une composition de liant ou au moins une dispersion aqueuse, avec ladite résine, ou composition de liant ou dispersion aqueuse étant telle que définie ci-dessus selon l'invention. Selon un cas plus particulier et préféré, ladite composition est une composition de revêtements aqueux. Ledit revêtement est sélectionné de préférence parmi les revêtements décoratifs ou industriels, et en particulier pour les revêtements industriels, choisi parmi les revêtements anti-corrosion, et de préférence parmi les revêtements aqueux pour les adhésifs, peintures, lasures, primaires et vernis. Le revêtement préféré est sélectionné parmi les peintures ou vernis aqueux décoratifs ou industriels. Ces compositions aqueuses de revêtement et en particulier les peintures et vernis ont l'avantage supplémentaire de sécher sans apport obligatoire (ou encore à un taux réduit) d'agent siccatif.

La composition de revêtement à base de dispersions aqueuses peut comprendre également un siccatif, qui peut être présent à un taux réduit ou non (normal), et dans ce cas ladite résine utilisée comme liant, a de préférence une longueur en huile allant jusqu'à 25% et de préférence de 15 à 25%. Compte tenu de leurs masses moléculaires et de leur longueur en huile adéquates, lesdites résines en particulier ayant un taux d'huile allant de 15 à 25%, sous l'effet d'un siccatif tel que le cobalt, permettent en plus d'une dureté élevée et d'une forte résistance au jaunissement, une excellente résistance au blocking, avec aucun point d'accroche ou d'arrachement observé en test, après 24 heures de séchage à température ambiante et 24 heures de contact. Une telle performance de résistance au blocking est attendue uniquement pour certaines dispersions acryliques mais elle est tout à fait exceptionnelle pour les dispersions de polyesters, en particulier dispersions d'alkydes, comme décrites dans la présente invention.

D'autre part, la présence de fonctions hydroxyles dans les résines définies selon l'invention permet de réaliser, pour des applications qualifiées d'industrielles, des réticulations à l'aide d'un second composant (système bicomposant appelé 2K) tels que isocyanates (bloqués ou non) ou mélamines pour former des films à plus haut poids moléculaire conduisant à des propriétés mécaniques ou chimiques supérieures : résistance chimique et mécanique comme longévité et durabilité accrues.

La composition de revêtement selon la présente invention couvre également une composition de revêtement qui comprend comme liant, au moins une résine telle que définie ci-haut selon l'invention et ayant une longueur en huile nulle (0%) ou une résine ayant une longueur en huile allant jusqu'à 5% comme définies ci-haut ou au moins une composition de liant basée sur une telle résine (longueur en huile nulle ou allant jusqu'à 5% comme définie ci-haut). Cette composition particulière de revêtement concerne plus particulièrement un revêtement de protection anti-corrosion et de grande résistance chimique pour applications en coil. Plus particulièrement, une telle composition de revêtement peut être utilisée en système réactif bicomposant (2K).

Un avant-dernier objet de l'invention concerne l'utilisation d'au moins une résine ou d'au moins une composition de liant ou d'au moins une dispersion aqueuse, comme définies ci-haut selon l'invention, en tant que liants dans les revêtements. Plus particulièrement, cette utilisation concerne des revêtements aqueux décoratifs ou industriels sélectionnés parmi les adhésifs, peintures, lasures, primaires ou vernis. Ces revêtements conviennent pour substrats sélectionnés parmi : bois, métaux, plâtre, béton, composites ou plastiques, plastiques comme le silicone, le polyéthylène, le PVC, le polycarbonate, le polypropylène ou le polystyrène.

Une utilisation plus particulière concerne la résine ayant une longueur en huile nulle ou ayant une longueur en huile allant jusqu'à à 5%, comme définies plus haut selon l'invention ou la composition de liant ou la dispersion aqueuse correspondante (comprenant ladite résine), cette utilisation étant en tant que liant pour des systèmes réactifs bicomposants (2K) dans les revêtements pour coil, pour applications marines ou en anticorrosion pour la protection des métaux (surfaces métalliques).

D'autre part, la forte hydrophobie ainsi que l'excellente adhésion, qualités procurées par lesdites résines en dispersion aqueuse selon la présente invention, en font un liant privilégié utilisable aussi bien dans des revêtements en milieu aqueux et non aqueux pour prévenir la corrosion des surfaces métalliques. Parmi les autres substrats sélectionnés, on peut trouver le bois, en notant que la nature hydrophobe et la présence de motifs «colophane» issue elle-même du bois, offre d'excellentes propriétés d'adhésion sur le bois. De façon surprenante, nous avons également trouvé par hasard que ces liants avaient également de fortes propriétés d'adhésion sur les plastiques tels que le silicone, le polyéthylène, l'ABS, le polycarbonate, le PVC ou sur le plâtre, la céramique, la brique ou les matériaux composites. Les compositions de revêtements formulées à partir d'au moins une dispersion aqueuse de ladite résine peuvent contenir un taux significativement réduit voire nul d'au moins un agent siccatif. De préférence, ces compositions peuvent être exemptes d'agents siccativants (ou siccatifs) et en particulier exemptes de cobalt en tant qu'agent siccativant. De même, de par son fort potentiel en séchage physique, des épaisseurs de revêtement un peu plus importantes seraient permises pour des temps de séchage équivalents, augmentant ainsi la productivité et améliorant également les conditions et délais (délai raccourci) de manipulation et d'utilisation des pièces revêtues, après revêtement.

Le dernier objet de cette invention concerne des substrats revêtus avec au moins un revêtement (de substrat), obtenus à partir d'au moins une résine ou à partir d'au moins une composition de liant ou à partir d'au moins une dispersion aqueuse de résine ou à partir d'au moins une composition de revêtements dérivée de ladite résine, comme définies ci-haut selon la présente invention. Dans certaines applications à forte concentration de charges et en système bicomposant, l'apport d'agent siccatif à base de cobalt, manganèse, plomb, vanadium, calcium, baryum, strontium, cérium, zinc et fer est inutile. Déjà, compte tenu des performances de séchage physique, démontrées par les compositions à base de résine à longueur d'huile réduite, en particulier de 0 à 15%, la présence de siccatif n'est nullement indispensable, avec une telle composition de revêtement.

### PARTIE EXPERIMENTALE

A titre d'illustration de l'invention, les exemples suivants décrivent sans aucune limitation des objets revendiqués, la synthèse desdites résines pour liants, en particulier aqueux, les performances des dispersions et des revêtements ainsi obtenus. Une illustration des performances en système bicomposant (2K) est également présentée en fin de partie expérimentale.

### 1) Matières premières utilisées (voir tableau 1 ci-dessous)

**Tableau 1 : Matières premières utilisées pour la préparation des résines testées**

| Nom commercial ou type de produit | Fournisseur | Nom chimique | Fonction | Indice d'iode (mg I₂/g) | Indice d'acide ou d'hydroxyle (mg KOH/g) |
|---|---|---|---|---|---|
| Nouracid® SZ35 | Oleon | Acide gras de soja | Acide gras | 120-150 | 195-205 |
| SYLFAT® 2 | Arizona | Acide gras de tall | Acide gras | 155 | 194 |
| Pripol® 1009 | Croda | Dimère d'acide gras | Polyacide | / | 195-205 |
| Pripol® 1017 | Croda | Mélange de dimères et trimères (75/25) d'acides gras | Polyacide | / | 195-210 |
| Acide Itaconique | Acros Organics | Acide itaconique | Polyacide | / | 860 |
| Colophane type « Pinus | TER-HELL & CO GBMBH | Colophane de gemme, avec taux d'acides | Colophane | / | 165-175 |
| Massoniana » chinois | | résiniques ∼90% | | | |
| FOR85 | Forchem | Colophane tall, acides résiniques : >85% | Colophane | / | 165-175 |
| Hydrogral ® | DRT | Colophane hydrogénée acides résiniques :∼89% | Colophane | / | 163 |
| Acide succinique | Aldrich | Acide succinique | Polyacide | / | 950 |
| Acide sébacique | Aldrich | Acide sébacique | Polyacide | / | 550 |
| Polyglycérol-3 | Solvay | Polyglycérol (mélange d'oligomères, centré sur 35-55% de trimères) | Polyol | / | 1000-1200 |
| Pentaérythritol | Perstorp | Pentaérythritol | Polyol | / | 1645 |
| Glycérol | Cargill | 1,2,3-Propanetriol | Polyol | / | 1828 |
| AOX-R | Alladchem | 4,4'-Thio-di-(3-methyl,6-tert-butylphénol) (CAS 96-69-5) | anti-oxydant | - | - |
| Zephrym® 3300 | CRODA | Dodécyl benzène sulfonate d'ammonium | Tensioactif anionique | | |
| Atlas® G5000 | CRODA | co-polymère bloc oxyde de propylène/éthylène | Tensioactif non-ionique | | |
| Synaqua® 4804* | Cray Valley | résine alkyde courte en huile (37%) en dispersion dans l'eau (extrait sec : 50%) | résine de référence | | |
| Synolac® 9605 S 65 | Cray Valley | résine polyester pour application générale « coil » | résine de référence | | |
| BORCHI® OXY-COAT | OMG-BORCHERS | Complexe de fer en solution dans du propylèneglycol. | Siccatif | | |
| DURHAM® COBALT 10WM | ROCKWOO D PIGMENTS | Complexe de cobalt en solution dans un solvant hydrocarboné dés aromatisé | Siccatif | | |
| ACTICIDE® MBS | THOR CHEMIE | Solution aqueuse de méthylisothiazoline (MIT) et de benzisothiazolinone (BIT) | Biocide | | |
| DISPERBYK® 190 | BYK CHEMIE | copolymères blocs ayant des groupes á forte affinité pour les pigments | Dispersant | | |
| BYK® 022 | BYK CHEMIE | Antimousse base polysiloxane | Antimousse | | |
| TIONA® 595 | CRISTAL GLOBAL | Dioxyde de Titane | Pigment | | |
| AQUAFLOW® NMS 450 | AQUALON-HERCULES | Polyéther polyacétal modifié hydrophobiquement | Epaississant | | |
| AQUAFLOW® NHS 300 | AQUALON-HERCULES | Polyéther polyacétal modifié | Epaississant | | |

| | | | | | |
|---|---|---|---|---|---|
| *Symbolisé SA4804 dans figures 1 et 2 | | | | | |

### 2) Préparation des résines de départ

13 résines ont été préparées selon les modes opératoires correspondants décrits ci-dessous dans les exemples 1 à 13.

### Exemple 1

Dans un réacteur de 5 litres, sous atmosphère d'azote et régulé en température et agité, on introduit 185,2 g de Pripol® 1009, 1453,3 g de colophane de gemme, 6 g de AOX-R (phénol sulfite) et 185,2 g de Polyglycérol-3. Le mélange est chauffé à 250-270°C et l'eau de condensation est éliminée jusqu'à obtenir un indice d'acide de 6 mg KOH/g.

### Exemple 2

Le même mode opératoire que pour l'exemple 1 est utilisé avec les produits et quantités suivantes : 592,0 g de Pripol® 1009, 1034,0 g de colophane de gemme, 6 g de AOX-R (phénol sulfite) et 374,0 g de Polyglycérol-3. L'eau de condensation est éliminée jusqu'à obtenir un indice d'acide de 4 mg KOH/g.

### Exemple 3

Le même mode opératoire que pour l'exemple 1 est utilisé mais avec les produits et quantités suivantes : 6,5 g d'acide gras de soja Nouracid® SZ35, 71,4 g de colophane de gemme et 22,0 g de Polyglycérol-3. L'eau de condensation est éliminée jusqu'à obtenir un indice d'acide de 4 mg KOH/g.

### Exemple 4

Dans un réacteur agité de 2 litres, sous atmosphère d'azote et régulé en température, on introduit 85,0 g d'acide gras de tall, 837,0 g de colophane de tall (For 85), 84,0 g d'acide succinique et 264,9 g de Polyglycérol-3. Le mélange est chauffé à 250-270°C, l'eau de condensation est éliminée jusqu'à obtenir un indice d'acide inférieur à 6 mg KOH/g.

### Exemple 5

Le même mode opératoire que pour l'exemple 4 est utilisé mais à partir des quantités suivantes : 9,3 g d'acide gras de soja, 64,2 g de colophane de gemme, 5,2 g d'acide succinique et 22,0 g de Polyglycérol-3. Le mélange est chauffé à 250-270°C, l'eau de condensation est éliminée jusqu'à obtenir un indice d'acide inférieur à 4 mg KOH/g.

### Exemple 6

Dans un réacteur agité de 0,25 litres, sous atmosphère d'azote et régulé en température, on introduit 9,5 g d'acide gras de soja, 65,6 g de colophane de gemme et 21,2 g de Polyglycérol-3. Le mélange est chauffé à 250-270°C, l'eau de condensation est éliminée jusqu'à obtenir un indice d'acide inférieur à 2-3 mg KOH/g. Ensuite, on ajoute 3,25 g d'acide itaconique à 150°C et le mélange est chauffé à 180°C jusqu'à obtenir un indice d'acide final de 8 mg KOH/g.

### Exemple 7

Dans un réacteur agité comme à l'exemple 4, on introduit 139,6 g d'acide gras de soja Nouracid® SZ35, 868,2 g de colophane de gemme, 83,6 g d'acide succinique, 68,1 g d'acide sébacique et 340,5 g de Polyglycérol-3. Le mélange est chauffé à 250-270°C, l'eau de condensation est éliminée jusqu'à obtenir un indice d'acide inférieur à 6 mg KOH/g.

### Exemple 8

Dans un réacteur agité comme à l'exemple 4, on introduit 116,5 g d'acide gras de soja Nouracid® SZ35, 801,5 g de colophane de tall, 67,6 g d'acide succinique et 264,9 g de Polyglycérol-3. Le mélange est chauffé à 250-270°C, l'eau de condensation est éliminée jusqu'à obtenir un indice d'acide inférieur à 7 mg KOH/g. 16,5 g d'acide succinique sont ensuite ajoutés et la condensation est poussée jusqu'à un indice d'acide de 5,5 mg KOH/g.

### Exemple 9

Dans un réacteur agité comme à l'exemple 4, on introduit 180,0 g de SYLFAT® 2 (acide gras de tall), 770,0 g de colophane de gemme, 69,0 g d'acide succinique et 273,9 g de Polyglycérol-3. Le mélange est chauffé à 250-270°C, l'eau de condensation est éliminée jusqu'à obtenir un indice d'acide inférieur à 7 mg KOH/g. Ensuite, on ajoute 22,8 g d'acide succinique et la condensation est poussée jusqu'à un indice d'acide de 4 mg KOH/g.

### Exemple 10

Dans un réacteur agité comme à l'exemple 4, on introduit 220,0 g de SYLFAT® 2 (acide gras de tall), 664,0 g de colophane de gemme, 73,6 g d'acide succinique, 255,9 g de Pripol® 1017 (mélange 75/25 dimère/trimère d'acides gras) et 255,9 g de Polyglycérol-3. Le mélange est chauffé à 250-270°C, l'eau de condensation est éliminée jusqu'à obtenir un indice d'acide inférieur à 5 mg KOH/g.

### Exemple 11

Dans un réacteur agité comme à l'exemple 4, on introduit 224,0 g de SYLFAT® 2 (acide gras de tall), 630,0 g de colophane de gemme, 35,0 g d'acide sébacique, 69,0 g d'acide succinique et 273,9 g de Polyglycérol-3. Le mélange est chauffé à 250-270°C, l'eau de condensation est éliminée jusqu'à obtenir un indice d'acide inférieur à 7 mg KOH/g. Ensuite, on ajoute 17,8 g d'acide succinique et la condensation est poussée jusqu'à un indice d'acide de 3 mg KOH/g.

### Exemple 12

Dans un réacteur agité comme à l'exemple 4, on introduit 270,0 g de SYLFAT® 2 (acide gras de tall), 520,0 g de colophane de gemme, 47,5 g d'acide sébacique, 69,0 g d'acide succinique et 273,9 g de Polyglycérol-3. Le mélange est chauffé à 250-270°C, l'eau de condensation est éliminée jusqu'à obtenir un indice d'acide inférieur à 7 mg KOH/g. Ensuite, on ajoute 17,8 g d'acide succinique et la condensation est poussée jusqu'à un indice d'acide de 3-4 mg KOH/g.

### Exemple 13

Dans un réacteur agité comme à l'exemple 4, on introduit 310 g de SYLFAT® 2 (acide gras de tall), 475 g de colophane de gemme, 69,0 g d'acide succinique, 78,1 g d'acide sébacique et 273,9 g de Polyglycérol-3. Le mélange est chauffé à 250-270°C, l'eau de condensation est éliminée jusqu'à obtenir un indice d'acide de 3 mg KOH/g.

Les compositions des 13 résines préparées selon les exemples 1-13 sont présentées au tableau 2 et les caractéristiques physico-chimiques correspondantes figurent au tableau 3 ci-dessous.

Exemples supplémentaires 14 à 17 de résines polyesters pour application bicomposant en « coil »

### Exemple 14

Dans un réacteur de 2 litres, sous atmosphère d'azote et régulé en température et agité, on introduit 444,0 g de Pripol® 1009, 775,5 g de colophane hydrogénée (Hydrogral®), 6,0 g de AOX-R (phénol sulfite) et 280,5 g de Polyglycérol-3. Le mélange est chauffé à 250-270°C et l'eau de condensation est éliminée progressivement jusqu'à obtenir un indice d'acide de 6 mg KOH/g. La résine est ensuite refroidie et dissoute dans un mélange de Solvarex® 9 (de TOTAL) / butyl glycol (80/20, m/m) jusqu'à obtenir un extrait sec final de 70%. La viscosité de la solution obtenue est comprise entre 2 000 et 3 000 mPa.s.

### Exemple 15

Dans un réacteur de 2 litres, sous atmosphère d'azote et régulé en température et agité, on introduit 555,0 g de Pripol® 1009, 753,2 g de colophane hydrogénée (Hydrogral®), 6,0 g de AOX-R (phénol sulfite) et 191,9 g de pentaerythritol. Le mélange est chauffé à 250-270°C. L'eau de condensation est éliminée progressivement jusqu'à obtenir un indice d'acide compris entre 6 et 10 mg KOH/g pour une viscosité comprise entre 6 500 et 7 500 mPa.s obtenue par dilution avec un mélange de Solvarex® 9 (TOTAL)/ butyl glycol (80/20, m/m) telle que décrite à l'exemple 14.

### Exemple 16

Dans un réacteur de 2 litres, sous atmosphère d'azote et régulé en température et agité, on introduit 468,8 g de Pripol® 1017, 754,6 g de colophane de gemme, 6,0 g de AOX-R (phénol sulfite), 80,0 g d'acide succinique et 196,6 g de glycérol. Le mélange est chauffé à 250-270°C. L'eau de condensation est éliminée progressivement jusqu'à obtenir un indice d'acide compris entre 2 et 6 mg KOH/g pour une viscosité comprise entre 2 000 et 3 000 mPa.s obtenue par dilution avec un mélange de Solvarex® 9 (TOTAL)/butyl glycol (80/20, m/m) telle que décrite à l'exemple 14.

### Exemple 17

Dans un réacteur de 2 litres, sous atmosphère d'azote et régulé en température et agité, on introduit 411,8 g de Pripol® 1009, 807,0 g de colophane FOR85, 4,5 g de AOX-R (phénol sulfite) et 280,4 g de Polyglycérol-3. Le mélange est chauffé à 250-270°C. L'eau de condensation est éliminée progressivement jusqu'à obtenir un indice d'acide compris entre 2 et 6 mg KOH/g pour une viscosité comprise entre 2 500 et 3 000 mPa.s obtenue par dilution avec un mélange de Solvarex® 9 (TOTAL)/butyl glycol (80/20, m/m) telle que décrite à l'exemple 14.

Les 4 exemples, 14 à 17, correspondent à quatre résines polyesters variantes du polyester décrit dans l'exemple 2 de longueur en huile nulle ou de longueur en huile inférieure à 5% comme définies ci-haut selon l'invention, avec un taux de colophane qui se situe autour de 50 à 52%, polyesters préparés spécifiquement pour les besoins d'applications plus particulières de type bicomposant pour coil.

Les compositions des résines des 4 exemples 14 à 17 sont présentées dans le tableau 2a et les caractéristiques physico-chimiques dans le tableau 3a.

**Tableau 2 : Composition chimique (% en poids) des résines des exemples 1-13**

| **Exemple** | **1** | **2** | **3** | **4** | **5** | **6** | **7** | **8** | **9** | **10** | **11** | **12** | **13** |
|---|---|---|---|---|---|---|---|---|---|---|---|---|---|
| Colophane* | 72,6 | 51,7 | 71,4 | 65,8 | 64,2 | 65,6 | 57,9 | 63,3 | 58,5 | 43,3 | 50,4 | 43,4 | 39,4 |
| Polyglycerol-3 | 18,1 | 18,7 | 22,1 | 20,8 | 21,2 | 21,7 | 22,7 | 20,9 | 20,8 | 20,9 | 21,9 | 22,9 | 22,7 |
| Acide gras de soja (Nouracid ® SZ35) | | | 6,5 | 6,7 | 9,3 | 9,5 | 9,3 | 9,2 | | | | | |
| Acide gras de tall (Sylfat ® 2) + acide gras de tall résiduel présent dans la colophane** | | | | | | | | | 13,7 | 14,3 | 17,9 | 22,5 | 25,7 |
| Pripol ® 1009 | 9,3 | 29,6 | | | | | | | | | | | |
| Pripol ® 1017 | | | | | | | | | | 16,7 | | | |
| Acide succinique | | | | 6,6 | 5,2 | | 5,6 | 6,6 | 7,0 | 4,8 | 6,9 | 7,2 | 5,7 |
| Acide sébacique | | | | | | | 4,5 | | | | 2,9 | 4,0 | 6,5 |
| Acide itaconique | | | | | | 3,2 | | | | | | | |
| Longueur en huile (% poids vs résine) | 0 | 0 | 7 | 10 | 10 | 10,5 | 10 | 13 | 15 | 16 | 20 | 25 | 29 |

| | | | | | | | | | | | | | |
|---|---|---|---|---|---|---|---|---|---|---|---|---|---|
| * Le taux massique indiqué dans le tableau correspond uniquement à la proportion de colophane, les acides gras résiduels éventuels présents dans le mélange initial sont décomptés. ** Cette mention concerne uniquement les exemples dans lesquels la colophane de tall a été utilisée (cette matière première contient environ 4% d'acide gras de tall). | | | | | | | | | | | | | |

**Tableau 3 : Propriétés physico-chimiques des résines pour application séchage air via une formulation aqueuse selon exemples 1 à 13**

| **Exemple** | **1** | **2** | **3** | **4** | **5** | **6** | **7** | **8** | **9** | **10** | **11** | **12** | **13** |
|---|---|---|---|---|---|---|---|---|---|---|---|---|---|
| Colophane* % en poids vs résine | 72,7 | 51,8 | 71,4 | 65,8 | 64,2 | 65,6 | 57,9 | 63,3 | 58,5 | 43,3 | 50,4 | 43,4 | 39,4 |
| Longueur en huile (%) (oxydable) | 0 | 0 | 7 | 10 | 10 | 10.5 | 10 | 13 | 15 | 16 | 20 | 25 | 29 |
| Taux global d'acide gras (oxydable ou non) | 9,3 | 29,6 | 6,5 | 9,2 | 9,3 | 9,5 | 9,3 | 11,7 | 13,7 | 31,1 | 17,9 | 22,5 | 25,7 |
| Taux d'acides gras oxydables / taux global d'acides gras | 0 | 0 | 1 | 1 | 1 | 1 | 1 | 1 | 1 | 0,46 | 1 | 1 | 1 |
| Ratio : équivalent colophane/équivalent acide(s) gras (oxydable ou non) | 6,4 | 1,4 | 9,1 | 8,1 | 5,7 | 5,7 | 5,1 | 5,7 | 3,5 | 1,1 | 2,3 | 1,6 | 1,3 |
| C=C oxydables (mol/kg) | 0 | 0 | 0,035 | 0,058 | 0,052 | 0,051 | 0,051 | 0,058 | 0,089 | 0,106 | 0,117 | 0,147 | 0,168 |
| Mn mesurée (SEC ou GPC) | 1350 | 2550 | 1100 | 2000 | 1750 | 1700 | 2550 | 2000 | 2250 | 3250 | 3000 | 3250 | 3350 |
| Tg résine (°C) | 33 | 10 | 29 | 21 | 18 | 21 | 19 | 11 | 13 | -7 | 3 | -13 | -20 |
| couleur Gardner | 6,5 | 5,0 | 9,0 | 6,0 | 6,6 | 8,0 | 8,2 | 5,1 | 6,0 | 8,0 | 8,5 | 7,0 | 8,0 |
| Indice d'acide | 6,2 | 4,0 | 4,0 | 5,6 | 2,1 | 7,0 | 2,4 | 5,5 | 4,2 | 5,0 | 3,0 | 3,5 | 3,0 |

| | | | | | | | | | | | | | |
|---|---|---|---|---|---|---|---|---|---|---|---|---|---|
| * Le taux massique indiqué dans le tableau correspond uniquement à la proportion de colophane, les acides gras résiduels éventuels présent dans le mélange initial sont décomptés | | | | | | | | | | | | | |

**Tableau 2a : Compositions des résines des exemples 14-17**

| **Exemples** | **14** | **15** | **16** | **17** |
|---|---|---|---|---|
| Colophane* | 51,7 | 50,2 | 50,3 | 51,7 |
| Polyglycerol-3 | 18,7 | | | 18,7 |
| Pentaerythritol | | 12,8 | | |
| Glycérol | | | 13,2 | |
| Acide gras de tall résiduel présent dans la colophane** | | | | 2,1 |
| Pripol ® 1009 | 29,6 | 37,0 | | 27,5 |
| Pripol ® 1017 | | | 31,2 | |
| Acide succinique | | | 5,3 | |
| Longueur en huile (% poids vs résine) | 0 | 0 | 0 | 2,4 |

| | | | | |
|---|---|---|---|---|
| * Le taux massique indiqué dans le tableau correspond uniquement à la proportion de colophane, les acides gras résiduels éventuels présent dans le mélange initial sont décomptés. ** Cette mention concerne uniquement les exemples dans lesquels la colophane de tall a été utilisée (cette matière première contient environ 4% d'acide gras de tall). | | | | |

**Tableau 3a : caractéristiques physicochimiques des résines selon exemples 14 à 17**

| **Exemple** | **14** | **15** | **16** | **17** |
|---|---|---|---|---|
| Colophane* % en poids vs résine | 51,7 | 50,2 | 50,3 | 51,7 |
| Longueur en huile (%) (oxydable) | 0 | 0 | 0 | 0 |
| Taux global d'acide gras *(oxydable ou non*) | 29,6 | 37,0 | 31,2 | 29,6 |
| Taux d'acides gras oxydables / taux global d'acides gras | 0 | 0 | 0 | 0,07 |
| Ratio : équivalent colophane/équivalent acide(s) gras (oxydable ou non) | 1,4 | 1,1 | 1,3 | 1,4 |
| C=C oxydables (mol/kg) | 0 | 0 | 0 | 0,004 |
| Mn mesurée (SEC ou GPC) | 2550 | 3150 | 2400 | 2500 |
| Tg résine (°C) | 8 | 2 | 7,5 | 9 |
| couleur Gardner | 6,1 | 7,5 | 7,8 | 5,2 |
| Indice d'acide | 5,7 | 7,4 | 2,9 | 3,5 |

| | | | | |
|---|---|---|---|---|
| * Le taux massique indiqué dans le tableau correspond uniquement à la proportion de colophane, les acides gras résiduels éventuels présent dans le mélange initial sont décomptés. | | | | |

### 3) Préparation des dispersions aqueuses testées, correspondant aux résines préparées selon exemples 1 à 13

Les résines préparées suivant les conditions décrites dans les exemples 1 à 13 (voir point 2 ci-haut) sont dispersées dans l'eau suivant le même mode opératoire général et comme décrit ci-dessous, à la seule exception éventuelle de la température de dispersion qui peut varier en fonction de la viscosité initiale de la résine à disperser.

Dans un réacteur de 1,5 litres, équipé d'un système d'agitation performant (mécanique), on introduit 435,0 g de résine, telle que préparée selon les exemples 1-13 décrits ci-dessus (voir point 2), préalablement fondue entre 60 et 100°C, en mélange avec les tensioactifs suivants, 18,5 g de ATLAS® G5000 et 8,5 g de ZEPHRYM® 3300B (tous deux fournis par Croda) et on agite pendant 45 minutes à une température comprise entre 60°C et 80°C (voir valeurs indiquées dans le tableau 4 ci-dessous). Si besoin, l'indice d'acide des résines est ajusté avant neutralisation par l'addition d'acide gras de soja, Nouracid® SZ35, afin d'obtenir un indice d'acide minimum de 4-5 mg KOH/g. Une solution neutralisante de LiOH à 10% dans l'eau est ensuite ajoutée progressivement à la même température. Il est important de noter que cette addition-neutralisation s'accompagne d'une augmentation importante de la viscosité du milieu, c'est pourquoi il est indispensable d'employer une agitation mécanique efficace et capable d'opérer dans des milieux extrêmement visqueux. Enfin, de l'eau est introduite entre 60-67°C jusqu'à obtenir un extrait sec de 40-55%. L'extrait sec ainsi que le pH sont ajustés si nécessaire. L'émulsion finale est ensuite refroidie puis déchargée pour être ensuite caractérisée et évaluée.

Les résultats de caractérisation des émulsions sont rassemblés dans le tableau 4 ci-dessous.

**Tableau 4 : Caractéristiques des dispersions aqueuses des résines des exemples 1 à 13**

| **Exemple vs résine** | **1** | **2** | **3** | **4** | **5** | **6** | **7** | **8** | **9** | **10** | **11** | **12** | **13** |
|---|---|---|---|---|---|---|---|---|---|---|---|---|---|
| Température émulsification | 70°C | 80°C | 67°C | 70°C | 70°C | 70°C | 70°C | 70°C | 70°C | 70°C | 70°C | 80°C | 80°C |
| Taille des particules (nm) | 232 | 153 | 159 | 301 | 332 | 140 | 332 | 274 | 263 | 236 | 244 | 315 | 285 |
| Polydispersité des particules | 0,06 | 0,02 | 0,07 | 0,17 | 0,10 | 0,16 | 0,18 | 0,04 | 0,00 | 0,03 | 0,05 | 0,00 | 0,00 |
| pH | 8,9 | 8,5 | 9,5 | 8,0 | 8,8 | 9,4 | 8,9 | 7,4 | 9,1 | 8,7 | 8,5 | 8,3 | 8,2 |
| Extrait sec % | 50,0 | 46,3 | 39,0 | 50,1 | 49,9 | 41,5 | 50,2 | 50,4 | 50,3 | 50,4 | 50,7 | 48,9 | 50,8 |

### 4) Préparation des formulations de vernis à base des dispersions préparées à partir de résines selon exemples 1 à 13

Le mode opératoire général de préparation de ces formulations des vernis est le suivant :
On verse, dans un récipient cylindrique de 250 ml environ, 150 g de liant aqueux (dispersion aqueuse) comme préparé selon la description au point 3) ci-haut. Le milieu est ensuite agité vigoureusement (avec Dispermat® CV) à température ambiante (20-25°C). Dans le cas des résines siccativées, l'agent de siccativation (Durham Co 10 WM, 0,1% de Cobalt métal sur liant sec) est ajouté lentement et progressivement sous agitation (à 700 tours/min) pendant 5 minutes. Le milieu est ensuite laissé au repos pendant 24 heures avant application.

### 5) Méthodes utilisées de caractérisation

### 5.1) Détermination de Tg des résines

La mesure de la température de transition vitreuse Tg est réalisée avec un appareil DSC, type DSC1-700 de METTLER avec un balayage de température à 10°C/min de -80°C à 150°C et après deux passages (balayages) consécutifs. La Tg retenue est celle correspondant au second passage (balayage).

### 5.2) Masses moléculaires des résines

Les mesures sont réalisées par chromatographie d'exclusion stérique (SEC), avec comme éluant le THF, dans les conditions suivantes :
- 2 colonnes mixtes D + 1 colonne 100Å + 1 colonne 50Å
- Elution avec phase mobile le THF, à 1 ml/min et à une température d'élution de 35°C, avec détection par indice de réfraction (RI).
- Calibration avec 11 étalons de polystyrène ayant des masses moléculaires monodisperses allant de 162 à 377400.

### 5.3) Evaluation des performances des nouveaux liants selon exemples 1 à 13 en dispersions aqueuses

L'évaluation de dureté est réalisée sur des films obtenus par application sur plaque de verre d'une couche de dispersion aqueuse d'épaisseur humide de 100 µm. Il s'agit de formulations de vernis brillants siccativés et non siccativés. L'agent de siccativation choisi est un système mono-métallique à base de cobalt (Durham Co 10 WM, avec 0,1% en poids de cobalt métal par rapport au poids de résine sèche). La dispersion utilisée comme référence de comparaison est une dispersion d'alkyde qui est le produit Synaqua® 4804 commercialisé par Cray Valley. Les performances de développement de dureté avec le temps après application et d'évolution de la résistance au jaunissement avec le temps de vieillissement des nouveaux liants sont ainsi comparées à celles de Synaqua® 4804, prise comme référence du marché dans ce domaine.

### 5.3.1) Préparation des formulations de vernis et peintures brillantes à base des dispersions préparées selon exemples 1 à 13

### Préparation de formulations de vernis

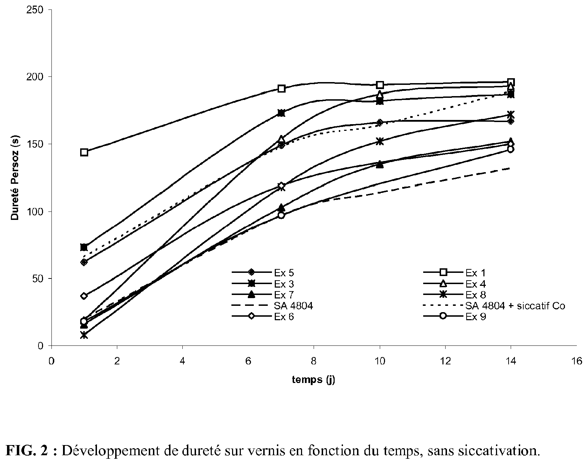

Le mode opératoire général de préparation des formulations de vernis est le suivant :
On verse dans un récipient cylindrique de 250 ml environ 150 g de liant aqueux (dispersion aqueuse) comme préparés ci-avant. Le milieu est ensuite agité vigoureusement (avec Dispermat® CV) à température ambiante (20-25°C). La figure 2 présente les résultats d'évolution de dureté et le tableau 5 les résultats d'évolution du jaunissement pour les vernis non siccativés.

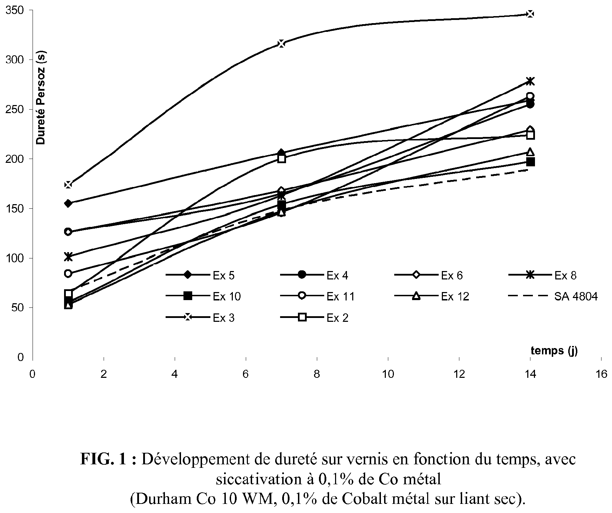

Pour les vernis siccativés, l'agent de siccativation est le Durham Co 10 WM, ajouté à 0,1% de Cobalt métal par rapport au liant sec (extrait sec de la dispersion testée) lentement et progressivement sous agitation à 700 tours/min, pendant 5 minutes. Le milieu est ensuite laissé au repos pendant 24 heures avant application. Les résultats d'évolution de dureté pour ces vernis siccativés sont présentés à la figure 1.

### Préparation des formulations de peintures brillantes

Pour la fabrication d'une base de broyage, on introduit dans un récipient successivement et sous agitation, l'eau et les différents constituants détaillées ci-dessous, à grande vitesse dans un disperseur Disperlux modèle 2075, jusqu'à obtenir une finesse < 10µm.

Pour la fabrication de la peinture, on introduit dans un récipient successivement et sous agitation, le liant (dispersion testée), la base de broyage précédemment préparée, l'eau et les différents constituants. L'agent de siccativation (Borcher Oxi-Coat) est ajouté lentement et progressivement sous agitation (à 700 tours/min) pendant 5 minutes à environ 1,5% pour les dispersions de l'invention et 0,25% pour la référence Synaqua 4804® (% exprimé par rapport au liant sec) afin d'obtenir une série de peintures sèches et recouvrables après 6 heures d'application. La composition de la formulation de peinture est présentée ci-dessous.

### Composition des formulations des peintures de dispersions de résines des exemples 1 à 13

| **Constituant** | **Fonction** | **Parties en Poids (%)** |
|---|---|---|
| Eau | - | 4,50 |
| ACTICIDE MBS | Biocide | 0,20 |
| DISPERBYK 190 | Agent dispersant | 0,58 |
| BYK 022 | Antimousse | 0,10 |
| TIONA 595 | Pigment | 23,00 |
| **Total base de broyage** | | **28,38** |
| Dispersion testée | - | 60,50 |
| BORCHI® OXY-COAT* | Siccatif | 0,45* |
| Eau | - | 8,81 |
| AQUAFLOW® NMS 450 | Epaississant | 0,75 |
| AQUAFLOW® NHS 300 | Epaississant | 1,15 |
| **Total peinture** | | **100** |

| | | |
|---|---|---|
| * quantité pour résine de référence Synaqua ® 4804 ajustée correspondant à 0,25% par rapport au liant sec (extrait sec de la dispersion de résine). | | |

Caractéristiques des formulations (calculées grâce au logiciel de formulation «PV-FORMULA Version 2-3» de Pierre Vergne - Inter Deposti Digital Number : IDDM.FR.001.280022.001.S.P.2001.0003.030265) :
Concentration volumique pigmentaire : CPV = 19%
Extrait sec en poids = 51,1%
Extrait sec en volume = 38,1%
Densité d = 1,26

Sur ces formulations, ont été réalisés des tests comparatifs d'évolution du jaunissement avec les résultats présentés au tableau 6.

### 5.3.2) Test de dureté : selon méthode ISO 1522

Il s'agit d'une dureté Persoz réalisée à 23°C et à 50% d'humidité relative. Les vernis sont appliqués à 100 µm d'épaisseur humide, puis séchés sur une surface parfaitement horizontale à 23°C et sous une humidité relative de 50% pendant 24 heures avant la première mesure.

### 5.3.3) Mesure du jaunissement : selon méthode Yellowing index (Yi) ASTM E313-96

Les mesures de jaunissement sont réalisées sur carte Leneta 2A avec une épaisseur humide de 150 µm. La surface est ensuite séchée de façon parfaitement horizontale à 23°C et sous 50% d'humidité relative pendant 24 h avant la mesure à l'aide d'un Spectrophotocolorimètre MINOLTA CM2600D (mesure sur partie blanche de la carte). Le jaunissement est ensuite accéléré en plaçant les cartes Leneta dans une étuve à 50°C à l'abri de la lumière, pendant 15 jours.

### 5.3.4) Résistance au blocking

Les résistances au blocking sont réalisées sur carte Leneta 2A avec une épaisseur humide de 150 µm. On applique pour ce test deux films de peinture brillante (préparation détaillée au point 5.3.1) avec remplacement du siccatif BORCHI® OXY-COAT par Durham Co 10 WM (0,1% de Cobalt métal sur liant sec)) sur des cartes Leneta distinctes, lesquelles sont ensuite positionnées après 24 heures de séchage à température ambiante face à face de telle sorte que les peintures soient en contact. Un poids de 50 g.cm⁻² est ensuite placé sur les deux cartes mises face à face, exerçant une pression de 50 g.cm⁻². Après 24 h de contact, les deux cartes Leneta sont séparées et examinées. On exprime le résultat obtenu qualitativement en fonction de la surface totale arrachée de la peinture blanche, avec une note allant de 0 (0 = aucun point d'arrachement) à 8 (8 étant la pire note avec plaque fortement dégradée).

### 6) Résultats de développement de dureté, de résistance au jaunissement et de résistance au blocking pour revêtements à base de dispersions aqueuses obtenues à partir des résines selon exemples 1 à 13

Les résultats de développement de dureté sont présentés aux figures 1 et 2 respectivement pour des vernis siccativés et non siccativés.

Les résultats de jaunissement sur vernis de formulation précisée au point 5.3.1) sans siccatif sont présentés dans le tableau 5 pour les liants ne nécessitant pas d'agent de siccativation pour sécher (séchage au toucher < 24 heures) et possédant une longueur en huile jusqu'à 15% (résines parmi exemples 1 à 9).

Les résultats de jaunissement pour l'intégralité des liants de l'invention pour une formulation de peinture brillante siccativée, telle que décrite au point 5.3.1), sont présentés au tableau 6. Le taux de siccatif est ajusté et optimisé pour obtenir une peinture sèche et recouvrable après 6 heures.

**Tableau 5 : Evolution du jaunissement des vernis non siccativés**

| Résine | Ex 1 | Ex 3 | Ex 4 | Ex 5 | Ex 6 | Ex 7 | Ex 8 | Ex 9 | Synaqua® 4804 (référence) |
|---|---|---|---|---|---|---|---|---|---|
| Evolution de jaunissement | +58% | +37% | +58% | +92% | +90% | +54% | +115% | +120% | +137% |

**Tableau 6 : Evolution du jaunissement des peintures brillantes**

| Résine | Ex 1 | Ex 2 | Ex 3 | Ex 4-7 | Ex 8 | Ex 9 | Ex 10 | Ex 11 | Ex 12 | Synaqua® 4804 (référence) |
|---|---|---|---|---|---|---|---|---|---|---|
| Evolution de Jaunissement (%) | +58 | +34 | +34 | +80 | +67 | +60 | +90 | +75 | +100 | +150 |

La capacité à durcir plus rapidement pour les nouveaux liants aqueux de l'invention est encore plus perceptible et notable en l'absence de siccativation (voir figure 2). La figure 2 illustre le développement de dureté pour les liants aqueux à base de résines ayant la longueur en huile la plus courte et allant de 0 à 15%, ce qui signifie ayant une longueur en huile nulle (0%) ou allant jusqu'à 15%, ce qui est assez surprenant compte tenu de ces taux très faibles voire nuls. Au contraire, on constate que les résines à longueur en huile d'environ 15 à 30% nécessitent l'emploi d'agent de siccativation afin de développer leur haut potentiel de dureté. En revanche, de bons, voir d'excellents niveaux de dureté, peuvent être enregistrés sans apport d'agent de siccativation à partir des résines à longueur en huile faible voire nulle (0-15%) (voir figure 2).

De manière générale, ces nouvelles résines présentent des développements de dureté rapides avec des niveaux de dureté (à 15 jours) largement supérieurs à ceux de la dispersion de référence Synaqua® 4804. Pour certaines d'entre elles (parmi les plus courtes en huile), les duretés finales atteintes sans emploi d'agent de siccativation sont même identiques ou supérieures à la résine de référence (4804®) siccativée. Cette capacité à durcir fortement, sans apport nécessaire d'agent de siccativation, est un avantage sérieux dans le contexte environnemental actuel.

De manière avantageuse, devant les problèmes de toxicité pressentis avec les sels de cobalt, ces dispersions peuvent sécher avec des siccatifs moins nocifs (et moins actifs pour la plupart par comparaison avec les systèmes conventionnels à base de cobalt) tels que les sels de fer (Borcher Oxy-Coat), de vanadium ou de manganèse. De manière beaucoup plus avantageuse, certaines résines (0-15%) peuvent sécher et durcir avec des niveaux de performance élevés sans besoin d'agent de siccativation.

De manière avantageuse toujours, ces résines à longueur en huile fortement réduite, en l'absence ou en présence d'agent siccativant, présentent des évolutions plus faibles de jaunissement dans le temps (voir détails dans les tableaux 5 et 6 ci-dessus), par rapport à la résine de référence (Synaqua® 4804).

La figure 1 présente l'évolution avec le temps après l'application, de la dureté des revêtements obtenus pour des compositions de revêtements (vernis décrits ci-haut) en présence d'agent siccatif. Les dispersions selon l'invention ont au moins les mêmes performances sinon meilleures en termes de croissance rapide de la dureté avec le temps (en particulier pour la plage de dispersions à base de résines ayant une longueur en huile de 0 à 15%) que celles de la dispersion de référence (à base de résine Synaqua^{R} 4804) malgré une longueur en huile plus élevée pour cette dernière.

La figure 2 montre encore mieux les performances des dispersions selon l'invention en l'absence complète d'agent siccatif sur vernis. La dispersion de référence est également représentée en présence d'agent siccatif (0,1%) pour montrer que les dispersions correspondant à une longueur en huile allant de 0 à 15%, en l'absence de tout siccatif, ont des meilleures performances (sur vernis) que la dispersion de référence même en comparant cette dernière, en présence de 0,1% de siccatif (conditions de comparaison plus défavorables pour les dispersions de l'invention).

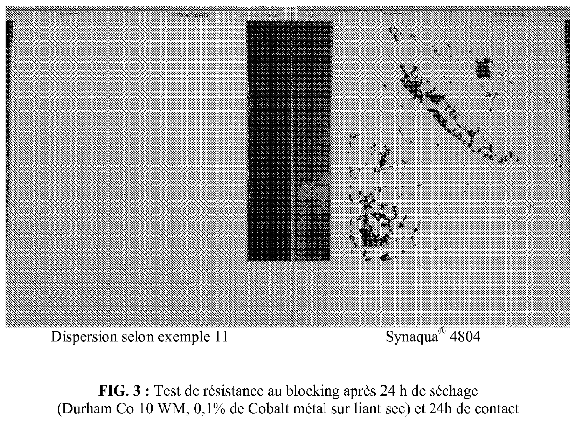

De manière avantageuse, les résines à longueur en huile allant de 15 à 25%, siccativées au cobalt comme décrit ci-avant, possèdent une excellente résistance au blocking en particulier par rapport à la résine de référence (Synaqua® 4804). La figure 3 montre de façon explicite et qualitative cette différence nette de résistance au blocking entre une dispersion préparée selon l'exemple 11 (dans partie gauche de la figure 3) et la résine de référence (Synaqua® 4804 dans partie droite). De façon surprenante, la résine de l'invention dans ces conditions ne conduit à aucun point d'accroche ni arrachement du revêtement lors du test de résistance au blocking (note = 0) contrairement à la résine de référence (note = 8). Le support d'application de la peinture blanche étant noir, cela signifie que les parties noires de l'image dans la figure 3, correspondent aux parties arrachées lors du test (partie droite avec note = 8). Dans le cas de la dispersion de résine selon exemple 11, l'image blanche démontre l'absence du moindre arrachement (note = 0).

### 7) Evaluation des résines à longueur en huile nulle (« oil free ») ou à longueur en huile allant jusqu'à 5%, en système bi-composant pour « coil »

Les résines concernées sont décrites dans l'exemple 2 ainsi que dans les exemples 14 à 17 qui sont des variantes de la résine de l'exemple 2 comme décrit plus haut.

### 7.1) Préparation des formulations non aqueuses pour revêtements (vernis) bicomposants en « coil »

Les solutions solvantées (translucides) des résines décrites selon les exemples 14 à 17 sont mélangées avec la mélamine CYMEL® 303 LF selon un rapport en poids 85/15 (résine sèche sur mélamine).

### Exemple de formulation :

| | |
|---|---|
| Résine (NVC 69.7%) | 73,7 |
| Solvarex 10 LN | 8 |
| BUTYLDIGLYCOL | 8 |
| CYMEL 303 LF | 9 |
| PTSA (12.5 % butanol) | 1,3 |
| **Total** | **100** |

Les vernis sont ensuite appliqués pour avoir une épaisseur de film sec de 20 µm ± 2 µm sur acier galvanisé GARDOBOND Réf 1303 62 OE, de 0,8 mm d'épaisseur, puis passés au four chauffé à 315°C afin d'atteindre une température maximale du support métallique de 232°C avant refroidissement.

### 7.2) Evaluation des performances des liants de longueur en huile nulle (« oil-free ») ou à longueur en huile allant jusqu'à 5%, en système bicomposant pour coil

### 7.2.1) Méthodes et tests utilisés

### a) Résistance chimique à la MEC (Methyl Ethyl Cétone)

La résistance au solvant est évaluée par usure de la surface des échantillons avec une mèche en coton imbibée de MEC effectuant des allers-retours sur les revêtements tels que décrits au point 7.1). Le test est réalisé à une fréquence de 60 cycles/minute (1 aller-retour par sec) avec une charge de 1 kg sur un abrasimètre linéaire. Le temps mesuré correspond à la durée pendant laquelle le film de peinture a résisté à l'abrasion en présence du solvant.

### b) Test d'adhérence

Le test d'adhérence et la cotation sont réalisés selon la norme ISO 2409:2007 en utilisant un scotch 3M référence 2525 (pouvoir adhérent : 700 cN/cm). Cotation adhérence : échelle de 0 : bon, à 5 : mauvais. Le test est répété une deuxième fois (résultats présentés au tableau 7).

### c) Test d'adhérence avec embouti et vieillissement à 90°C

1) Sur plaque d'acier galvanisé (dimension 100 mm x 60 mm) recouverte du revêtement tel que décrit au point 7.1), on réalise un emboutissage de 7 mm de profondeur à l'endroit précis du test d'adhérence à l'aide d'un appareil d'emboutissage type Cupping Tester ELCOMETER 1620 équipé d'un poinçon de forme hémisphérique de 20 mm de diamètre montant à la vitesse de 0,2 mm/s.
2) On place ensuite la plaque 30 minutes dans une étuve à 90°C. Après refroidissement de 30 minutes en salle climatisée (23 °C ± 2 °C et 50 ± 5 % HR), on effectue un test d'adhérence selon la norme ISO 2409.

Le test complet est répété une deuxième fois, avec les résultats présentés au tableau 7.

### d) Test de dureté (Persoz)

Mesure de l'amortissement du pendule (1 oscillation/s) selon NF EN ISO 1522 (cf. description du test au point 5.3.2).

### 7.2.2) Résultats obtenus

Ces résultats sont présentés au tableau 7 ci-dessous :

**Tableau 7 : Résultats applicatifs sur acier galvanisé**

| Exemple | Synolac® 9605 S 65 | 2 | 14 | 15 | 16 | 17 |
|---|---|---|---|---|---|---|
| Résistance chimique à la MEC* | 80 s | 140 s | 140 s | 100 s | 120 s | 170 s |
| Test d'adhérence (ISO 2409) | 0/0 | 0/0 | 0/0 | 0/0 | 0/0 | 0/0 |
| Test d'adhérence avec embouti et vieillissement à 90°C | 2/2 | 0-1/0-1 | 0-1/0-1 | 0-1/0-1 | 0-1/0-1 | 0-1/0-1 |
| Dureté Persoz (ISO 1522) | 296 s | 340 s | 350 s | 312s | 320 s | 332 s |

| | | | | | | |
|---|---|---|---|---|---|---|
| * Méthyl Ethyl cétone | | | | | | |

La résine décrite dans l'exemple 2 ainsi que les résines selon les exemples 14 à 17 conduisent, toutes sans exception, à des performances très élevées en termes de dureté, résistance chimique et adhérence sur métal (acier galvanisé dans le cas de cette application) et meilleures que celles de la résine de référence pour application coil (Synolac® 9605 S 65). Tout d'abord, l'adhésion se trouve très fortement renforcée sur métal grâce à l'incorporation de matières telles que la colophane et les acides gras (dimères pour l'essentiel) toutes d'origine naturelle. Les performances élevées enregistrées concernant la dureté en système bicomposant pour coil confirment le gain de dureté important observé sur les revêtements (vernis) obtenus à partir des dispersions aqueuses séchées à l'air libre (voir figures 1 et 2).

## Revendications

1. Résine de polyester, en particulier résine alkyde, **caractérisée en ce qu'**elle :
- est à base d'au moins un acide gras
- a une longueur en huile nulle (0%), ledit acide gras étant sélectionné parmi les acides gras non oxydables avec un taux d'insaturation oxydable de 0 mmol par g de résine sèche ou ladite résine a un taux d'huile allant jusqu'à 5% et qu'en plus dudit acide gras sélectionné parmi les acides gras non oxydables, elle comprend en proportions minoritaires en poids, un acide gras oxydable conduisant audit taux d'huile allant jusqu'à 5%,
ledit acide gras non oxydable étant sélectionné parmi les oligomères d'acides gras
- a un rapport en poids d'acides (monoacides) gras oxydables par rapport aux acides gras globalement, de 0 ou supérieur à 0 et allant jusqu'à 1,
- est à base d'un composant acide comprenant en plus dudit acide gras, de 45 à 75% en poids, par rapport au poids total de ladite résine, de colophane et/ou de dérivés de colophane portant au moins une fonction acide carboxylique.

2. Résine selon la revendication 1, **caractérisée en ce qu'**elle comprend moins de 5%, de préférence moins de 3% en poids, et plus préférentiellement aucun (%) composé aromatique en dehors des dérivés éventuels de la colophane.

3. Résine selon l'une des revendications 1 ou 2, **caractérisée en ce qu'**elle est à base d'un composant alcool comprenant au moins un polyol de fonctionnalité allant de 2 à 10 et de préférence de 3 à 6.

4. Résine selon l'une des revendications 1 à 3, **caractérisée en ce qu'**elle a un indice d'acide inférieur à 8 et une masse moléculaire moyenne en nombre Mn, mesurée par GPC en équivalent Polystyrène dans le THF, allant de 1 000 à 10 000.

5. Résine selon l'une des revendications 1 à 4, **caractérisée en ce qu'**elle a une Tg mesurée par DSC, allant de -40 à 50°C et de préférence de -20 à 35°C.

6. Résine selon l'une des revendications 1 à 5, **caractérisée en ce que** lesdits oligomères d'acides gras, sont choisis parmi les dimères en C₃₆ (y compris hydrogénés) et/ou les trimères en C₅₄ (y compris hydrogénés).

7. Composition de liant organique, **caractérisée en ce qu'**elle comprend au moins une résine telle que définie selon l'une des revendications 1 à 6.

8. Composition selon la revendication 7, **caractérisée en ce qu'**en plus de la première résine telle que définie selon l'une des revendications 1 à 6, elle comprend au moins une deuxième résine différente de la première, avec cette deuxième résine étant sélectionnée parmi les résines de polyesters à base d'acides gras, de préférence parmi les résines alkydes modifiées.

9. Composition de revêtement, **caractérisée en ce qu'**elle comprend comme liant au moins une résine telle que définie selon l'une des revendications 1 à 6 ou au moins une composition de liant telle que définie selon la revendication 7 ou 8.

10. Composition de revêtement selon la revendication 9, **caractérisée en ce que** ledit revêtement est sélectionné parmi les revêtements décoratifs ou industriels, en particulier pour les revêtements industriels parmi les revêtements anti-corrosion, de préférence parmi les revêtements aqueux : adhésifs, peintures, lasures, primaires et vernis.

11. Composition de revêtement selon la revendication 10, **caractérisée en ce qu'**il s'agit d'un revêtement de protection pour applications en coil.

12. Utilisation d'au moins une résine telle que définie selon l'une des revendications 1 à 6 ou d'une composition de liant telle que définie selon l'une des revendications 7 ou 8, **caractérisée en ce qu'**il s'agit d'utilisation comme liant dans les revêtements.

13. Utilisation selon la revendication 12, **caractérisée en ce que** la résine utilisée comme liant est telle que définie selon l'une des revendications 1 à 6 et **en ce que** qu'il s'agit d'une utilisation comme liant dans les revêtements bicomposants, plus particulièrement pour coil et encore plus particulièrement dans les applications marines et en anti-corrosion.

14. Revêtements de substrat, **caractérisés en ce qu'**ils sont obtenus à partir d'au moins une résine telle que définie selon l'une des revendications 1 à 6 ou à partir d'au moins une composition de liant telle que définie selon l'une des revendications 7 ou 8.

## Patentansprüche

1. Polyesterharz, insbesondere Alkydharz, **dadurch gekennzeichnet, dass** es
- auf mindestens einer Fettsäure basiert,
- eine Öllänge von null (0 %) aufweist, wobei die Fettsäure aus nicht oxidierbaren Fettsäuren mit einem Gehalt an oxidierbaren Ungesättigtheiten von 0 mmol pro g trockenes Harz ausgewählt ist, oder das Harz einen Ölgehalt von bis zu 5 % aufweist, und dass es zusätzlich zu der aus nicht oxidierbaren Fettsäuren ausgewählten Fettsäure in untergeordneten Gewichtsanteilen eine oxidierbare Fettsäure umfasst, was dazu führt, dass der Ölgehalt bis zu 5 % beträgt, wobei die nicht oxidierbare Fettsäure aus Fettsäureoligomeren ausgewählt ist,
- ein Gewichtsverhältnis von oxidierbaren Fettsäuren (Monofettsäuren) zu Fettsäuren insgesamt von 0 oder größer als 0 und bis zu 1 aufweist,
- auf einer sauren Komponente basiert, die zusätzlich zu der Fettsäure 45 bis 75 Gew.-%, bezogen auf das Gesamtgewicht des Harzes, Kolophonium und/oder Kolophoniumderivate mit mindestens einer Carbonsäurefunktion umfasst.

2. Harz nach Anspruch 1, **dadurch gekennzeichnet, dass** es weniger als 5 Gew.-%, vorzugsweise weniger als 3 Gew.-% und weiter bevorzugt keine (%) aromatische Verbindung außer den fakultativen Kolophoniumderivaten umfasst.

3. Harz nach Anspruch 1 oder 2, **dadurch gekennzeichnet, dass** es auf einer Alkoholkomponente basiert, die mindestens ein Polyol mit einer Funktionalität im Bereich von 2 bis 10 und vorzugsweise von 3 bis 6 umfasst.

4. Harz nach einem der Ansprüche 1 bis 3, **dadurch gekennzeichnet, dass** es eine Säurezahl von weniger als 8 und eine mittels GPC als Polystyrol-Äquivalent in THF gemessene zahlenmittlere Molmasse Mn im Bereich von 1000 bis 10.000 aufweist.

5. Harz nach einem der Ansprüche 1 bis 4, **dadurch gekennzeichnet, dass** es eine mittels DSC gemessene Tg im Bereich von -40 bis 50 °C und vorzugsweise von -20 bis 35 °C aufweist.

6. Harz nach einem der Ansprüche 1 bis 5, **dadurch gekennzeichnet, dass** die Fettsäureoligomere aus C₃₆-Dimeren (einschließlich hydrierter Dimere) und/oder C₅₄-Trimeren (einschließlich hydrierter Trimere) ausgewählt sind.

7. Organische Bindemittelzusammensetzung, **dadurch gekennzeichnet, dass** sie mindestens ein Harz gemäß einem der Ansprüche 1 bis 6 umfasst.

8. Zusammensetzung nach Anspruch 7, **dadurch gekennzeichnet, dass** sie neben dem ersten Harz gemäß einem der Ansprüche 1 bis 6 mindestens ein zweites Harz umfasst, das von dem ersten Harz verschieden ist, wobei dieses zweite Harz aus Polyesterharzen auf Basis von Fettsäuren, vorzugsweise aus modifizierten Alkydharzen, ausgewählt ist.

9. Beschichtungszusammensetzung, **dadurch gekennzeichnet, dass** sie als Bindemittel mindestens ein Harz gemäß einem der Ansprüche 1 bis 6 oder mindestens eine Bindemittelzusammensetzung gemäß Anspruch 7 oder 8 umfasst.

10. Beschichtungszusammensetzung nach Anspruch 9, **dadurch gekennzeichnet, dass** die Beschichtung aus dekorativen oder technischen Beschichtungen, insbesondere für technische Beschichtungen aus Korrosionsschutzbeschichtungen, vorzugsweise aus wässrigen Beschichtungen: Klebstoffen, Anstrichmitteln, Lasuren, Grundierungen und Lacken, ausgewählt ist.

11. Beschichtungszusammensetzung nach Anspruch 10, **dadurch gekennzeichnet, dass** es sich um eine Schutzbeschichtung für Coil-Anwendungen handelt.

12. Verwendung mindestens eines Harzes gemäß einem der Ansprüche 1 bis 6 oder einer Bindemittelzusammensetzung gemäß einem der Ansprüche 7 oder 8, **dadurch gekennzeichnet, dass** es sich um eine Verwendung als Bindemittel in Beschichtungen handelt.

13. Verwendung nach Anspruch 12, **dadurch gekennzeichnet, dass** das als Bindemittel verwendete Harz wie gemäß einem der Ansprüche 1 bis 6 definiert ist und es sich um eine Verwendung als Bindemittel in zweikomponentigen Beschichtungen, spezieller für Coil-Anwendungen und noch spezieller bei marinen Anwendungen und Korrosionsschutz-Anwendungen handelt.

14. Substratbeschichtungen, **dadurch gekennzeichnet, dass** sie aus mindestens einem Harz gemäß einem der Ansprüche 1 bis 6 oder aus mindestens einer Bindemittelzusammensetzung gemäß einem der Ansprüche 7 oder 8 erhalten werden.

## Claims

1. Polyester resin, in particular alkyd resin, **characterized in that** it:
- is based on at least one fatty acid,
- has a zero oil length (0%), said fatty acid being selected from nonoxidizable fatty acids with a content of oxidizable unsaturation of 0 mmol per g of dry resin or said resin has an oil content ranging up to 5% and that, in addition to said fatty acid selected from nonoxidizable fatty acids, it comprises in minor weight proportions an oxidizable fatty acid leading to said oil content ranging up to 5%,
said nonoxidizable fatty acid being selected from fatty acid oligomers,
- has a weight ratio of oxidizable fatty acids (monoacids) relative to the fatty acids overall of 0 or higher than 0 and up to 1,
- is based on an acid component comprising, in addition to said fatty acid, from 45% to 75% by weight, relative to the total weight of said resin, of rosin and/or of rosin derivatives bearing at least one carboxylic acid function.

2. Resin according to Claim 1, **characterized in that** it comprises less than 5%, preferably less than 3%, by weight and more preferentially no (%) aromatic compound besides the optional rosin derivatives.

3. Resin according to either of Claims 1 and 2, **characterized in that** it is based on an alcohol component comprising at least one polyol of functionality ranging from 2 to 10 and preferably from 3 to 6.

4. Resin according to one of Claims 1 to 3, **characterized in that** it has an acid number of less than 8 and a number-average molecular mass Mn, measured by GPC as polystyrene equivalents in THF, ranging from 1000 to 10 000.

5. Resin according to one of Claims 1 to 4, **characterized in that** it has a Tg, measured by DSC, ranging from -40 to 50°C and preferably from -20 to 35°C.

6. Resin according to one of Claims 1 to 5, **characterized in that** said fatty acid oligomers are chosen from C₃₆ dimers (including hydrogenated dimers) and/or C₅₄ trimers (including hydrogenated trimers).

7. Organic binder composition, **characterized in that** it comprises at least one resin as defined according to one of Claims 1 to 6.

8. Composition according to Claim 7, **characterized in that**, in addition to the first resin as defined according to one of Claims 1 to 6, it comprises at least one second resin different from the first, with this second resin being selected from polyester resins based on fatty acids, preferably from modified alkyd resins.

9. Coating composition, **characterized in that** it comprises as binder at least one resin as defined according to one of Claims 1 to 6 or at least one binder composition as defined according to Claim 7 or 8.

10. Coating composition according to Claim 9, **characterized in that** said coating is selected from decorative or industrial coatings, in particular for industrial coatings from anticorrosion coatings, preferably from water-based coatings: adhesives, paints, surface coatings, primers and varnishes.

11. Coating composition according to Claim 10, **characterized in that** it is a protective coating for coil applications.

12. Use of at least one resin as defined according to one of Claims 1 to 6 or of a binder composition as defined according to either of Claims 7 and 8, **characterized in that** it concerns use as a binder in coatings.

13. Use according to Claim 12, **characterized in that** the resin used as binder is as defined according to one of Claims 1 to 6 and **in that** it concerns use as a binder in two-pack coatings, more particularly for coil applications and even more particularly in marine and anticorrosion applications.

14. Substrate coatings, **characterized in that** they are obtained from at least one resin as defined according to one of Claims 1 to 6 or from at least one binder composition as defined according to either of Claims 7 and 8.
